# EUROPÄISCHE PATENTSCHRIFT

(11) **EP 2 363 320 B1**
(45) Veröffentlichungstag und Bekanntmachung des Hinweises auf die Patenterteilung: **12.12.2018**
(21) Anmeldenummer: 11000706.9
(22) Anmeldetag: 28.01.2011
(51) Int. Cl.: B60Q 1/20, B60Q 1/28, F21S 41/147, F21S 41/663

(54) **Frontscheinwerfer mit einem LED-Reflexionssystem mit Nebellicht- und Tagfahrlichtfunktion**
Front headlamp with a LED reflection system with fog light and day driving light function
Phare frontal doté d'un système de réflexion DEL doté d'une fonction de feux de brouillard et de feux de jour

(30) Priorität: 27.02.2010 DE 102010009640
(43) Veröffentlichungstag der Anmeldung: 07.09.2011
(73) Patentinhaber: Automotive Lighting Reutlingen GmbH, 72762 Reutlingen (DE)
(72) Erfinder: Stade, Florian, 44359 Dortmund (DE); Boebel, Doris, 70184 Stuttgart (DE); Scholl, Michael, 72810 Gomaringen (DE)
(74) Vertreter: DREISS Patentanwälte PartG mbB

(56) Entgegenhaltungen:
- WO-A1-2007/133006
- DE-A1-102005 020 304
- DE-A1-102006 043 298
- DE-A1-102008 036 194
- DE-U1-202009 002 518
- US-A1- 2004 223 338
- US-A1- 2008 062 709
- US-A1- 2008 180 968
- US-A1- 2009 129 083

## Beschreibung

Die vorliegende Erfindung betrifft einen Frontscheinwerfer für ein Kraftfahrzeug nach dem Oberbegriff des Anspruchs 1.

Ein solcher Frontscheinwerfer ist aus der US 2009/0129083 A bekannt. Bei dem bekannten Frontscheinwerfer beleuchten zwei Halbleiterlichtquellen ein und denselben Reflektor. Sie sind räumlich benachbart zueinander angeordnet. Ihre Hauptabstrahlrichtungen sind parallel. Aufgrund der räumlich getrennten Anordnung werden mit beiden Lichtquellen unterschiedliche Lichtverteilungen, nämlich eine Nebellicht Lichtverteilung und eine Tagfahrlicht-Lichtverteilung erzeugt.

Aus der DE 20 2009 002 518 U1 ist eine Mehrzweck - Fahrzeugleuchtvorrichtung bekannt, die zwei parallele Reihen von Leuchtdioden aufweist. Die eine Reihe dient zur Verwirklichung einer Tageslichtlampe, während die andere zur Verwirklichung einer Positionslampe, eines Nebelscheinwerfers oder eines Blinkers dient. Die einzelnen Leuchtdioden besitzen alle die gleiche Orientierung in Bezug auf ihre Einbaulage, so dass auch ihre Hauptabstrahlrichtungen gleich orientiert und damit parallel gerichtet sind.

Aus der US 2008/0062709 A1 ist eine Kraftfahrzeugbeleuchtungseinrichtung bekannt, die eine erste Lichtquelle und eine zweite Lichtquelle aufweist, deren Hauptabstrahlrichtungen zueinander senkrecht ausgerichtet sind. Die eine Lichtquelle beleuchtet einen Reflektor und erzeugt eine Nebelscheinwerfer-Lichtverteilung. Die andere Lichtquelle ist außerhalb des Reflektors angeordnet. Sie strahlt durch eine Öffnung in einer Blende hindurch und erzeugt eine Tagfahrlicht-Lichtverteilung.

Aus der DE 10 2005 020 304 A1 ist eine Kraftfahrzeugleuchte mit mindestens einer Lichtquelle bekannt. Ein Reflektor der Kraftfahrzeugleuchte ist längs der Hauptabstrahlrichtung der Lichtquelle verschiebbar.

Die US 2008/018968 A1 zeigt eine Kraftfahrzeugleuchte, die eine Glühlampe mit zwei Filamenten aufweist. Ein Filament dient zur Verwirklichung einer Nebellampe, während das andere Filament eine Tagfahrlicht-Lichtverteilung erzeugen soll. Als gleichorientierte Filamente besitzen auch die Hauptabstrahlrichtungen beider Filamente die gleiche Orientierung und sind daher parallel ausgerichtet.

Aus der WO 2007133006 A1 ist eine Nebellampe für Kraftfahrzeuge bekannt. Deren Lichtquelle weist eine zylindrische Grundform auf, deren Achse auf eine transparente Abdeckscheibe gerichtet ist. Die zylindrische Grundform trägt eine Vielzahl einzelner LEDs, von denen eine erste Gruppe auf der Mantelfläche, und eine zweite Gruppe auf der der Abdeckscheibe zugewandten Deckfläche der zylindrischen Grundform angeordnet ist. Damit soll eine Lampe bereitgestellt werden, die von ihren Steckverbindungen her mit einer H4-Glühlampe kompatibel ist und bei der die näherungsweise isotrope Lichtabstrahlung einer Glühlampe durch die Anordnung der Leuchtdioden nachgebildet wird.

Grundsätzlich lassen sich die Funktionen, die von Beleuchtungseinrichtungen eines Kraftfahrzeuges zu erfüllen sind, in Beleuchtungsfunktionen und in Signallichtfunktionen unterteilen.

Beleuchtungslichtfunktionen dienen der Beleuchtung der Fahrbahn und werden durch Scheinwerfer erfüllt. Beispiele zugehöriger Lichtverteilungen sind Abblendlichtverteilungen, Fernlichtverteilungen und Nebellichtverteilungen, wobei diese Liste nicht als abschließend zu verstehen ist. Signallichtfunktionen dienen dem Zweck, andere Verkehrsteilnehmer auf das Kraftfahrzeug und/oder auf die Absichten des Fahrers aufmerksam zu machen und werden durch Leuchten erfüllt. Beispiele zugehöriger Lichtverteilungen sind Tagfahrlichtverteilungen, Begrenzungslichtverteilungen und Blinklichtverteilungen, wobei auch diese Liste nicht als abschließend zu verstehen ist.
Zur Realisierung dieser Lichtfunktionen weisen Kraftfahrzeuge im Frontbereich Beleuchtungseinrichtungen in Form von Frontscheinwerfern oder auch Leuchten auf. Dabei kann im Prinzip jede Lichtfunktion durch eine eigene Beleuchtungseinrichtung oder durch ein eigenes Lichtmodul innerhalb einer Beleuchtungseinrichtung erfüllt werden, die mehrere Lichtmodule aufweist.
In der Regel kann ein Lichtmodul jedoch nicht ohne weiteres beliebige Kombinationen von Lichtfunktionen erfüllen, da die Anforderungen an die räumliche Verteilung und die Beleuchtungsintensitäten in Bezug auf die unterschiedlichen Lichtfunktionen große Unterschiede aufweisen.
Aus diesem Grund weisen heutige Kraftfahrzeuge im Bugbereich sowohl rechts als auch links entweder jeweils mehrere separate Beleuchtungseinrichtungen in Form von Abblendlichtscheinwerfern, Fernlichtscheinwerfern, Nebelscheinwerfern, Blinkleuchten, Begrenzungsleuchten, usw. oder aber Beleuchtungseinrichtungen auf, in denen verschiedene Lichtmodule in einem gemeinsamen Gehäuse angeordnet sind. Insbesondere die Lichtfunktionen des Nebellichts und des Tagfahrlichtes werden bisher mit separaten Lichtmodulen oder Beleuchtungseinrichtungen realisiert.
Die bekannten Lösungen erfordern sowohl vergleichsweise viel Bauraum, was die Gestaltungsfreiheit einengt, als auch vergleichsweise hohe Kosten.
Vor diesem Hintergrund besteht die Aufgabe der Erfindung in der Angabe eines Frontscheinwerfers, der weniger Bauraum benötigt und weniger kostet als die bekannten Lösungen.
Diese Aufgabe wird mit einem Frontscheinwerfer der eingangs genannten Art gelöst, der zusätzlich die kennzeichnenden Merkmale des Anspruchs 1 aufweist. Eine bevorzugte Ausgestaltung zeichnet sich dadurch aus, dass der Frontscheinwerfer dazu eingerichtet ist, eine Tagfahrlichtverteilung als zweite Lichtverteilung zu erzeugen.
Die Erfinder haben erkannt, dass sich diese beiden Lichtverteilungen durch den Gegenstand der Erfindung mit einem einzigen Reflektor erfüllen lassen, der lediglich von zwei verschieden angeordneten Halbleiterlichtquellen beleuchtet wird. Häufig werden gerade für diese beiden Lichtverteilungen separate Beleuchtungseinrichtungen verwendet. Insbesondere die Nebellichtfunktion wird häufig separat realisiert, da sie durch eine vergleichsweise niedrige Anordnung unterhalb des Niveaus der üblichen Frontscheinwerfer begünstigt wird. Es ist ein besonderer Vorteil, dass bei einer solchen Konstellation auf jeder Seite der Fahrzeugfront zwei Beleuchtungseinrichtungen wegfallen können.

Ein weiterer großer Vorteil ergibt sich ebenfalls dadurch, dass Frontscheinwerfer in Form von Nebelscheinwerfern häufig als separate Beleuchtungseinrichtungen verwendet werden. Die Erfindung eröffnet dann die Möglichkeit, ältere Autos, die noch kein spezielles Tagfahrlichtmodul aufweisen, durch einen vergleichsweise preiswerten Austausch der Nebelscheinwerfer mit einem modernen Tagfahrlicht auszurüsten, das von langlebigen Halbleiterlichtquellen erzeugt wird.

Bevorzugt ist auch, dass der Frontscheinwerfer dazu eingerichtet ist, die Tagfahrlichtverteilung durch einen gemeinsamen Betrieb beider Halbleiterlichtquellen zu erzeugen. Auf diese Weise wird ein leistungsfähiges Tagfahrlicht bereitgestellt, wobei die Mehrfachnutzung der für das Nebellicht eingerichteten Halbleiterlichtquelle zusätzlich Kosten spart und die Installierung der erforderlichen Lichtleistung in dem vergleichsweise kleinen Bereich des Frontscheinwerfers erleichtert, der durch geometrische Bedingungen begrenzt wird, die für die Erzeugung der vorbestimmten Lichtverteilungen einzuhalten sind.

Ferner ist bevorzugt, dass der Frontscheinwerfer dazu eingerichtet ist, die Tagfahrlichtverteilung mit einem gedimmten Betrieb der ersten Halbleiterlichtquelle zu erzeugen. Auf diese Weise werden störend große Intensitätsunterschiede innerhalb der aus dem gleichzeitigen Betrieb beider Halbleiterlichtquellen resultierenden Summenlichtverteilung vermieden.

Eine alternative oder ergänzende Ausgestaltung sieht vor, dass der Frontscheinwerfer dazu eingerichtet ist, eine Begrenzungslichtverteilung als zweite Lichtverteilung zu erzeugen. Im Prinzip ergeben sich hier ähnliche Vorteile wie bei einer Tagfahrlichtfunktion als zweiter Lichtfunktion: Es ergibt sich insbesondere der Vorteil, dass ein separates Begrenzungslichtmodul oder eine separate Begrenzungsleuchte entfallen kann.

Eine weitere bevorzugte Ausgestaltung zeichnet sich dadurch aus, dass der Frontscheinwerfer dazu eingerichtet ist, die Begrenzungslichtverteilung mit einem gedimmten Betrieb der zweiten Halbleiterlichtquelle oder durch einen gedimmten Betrieb beider Halbleiterlichtquellen zu erzeugen. Diese Ausgestaltung besitzt den zusätzlichen Vorteil, dass die Begrenzungslichtfunktion ergänzend zur Tagfahrlichtfunktion ohne eine Änderung der lichttechnischen Hardware realisiert werden kann.

Bevorzugt ist auch, dass die erste Halbleiterlichtquelle eine oder mehrere Leuchtdioden aufweist. Mehrere Leuchtdioden sind besonders vorteilhaft, da sie eine Anordnung in eine Reihe erlauben, was für die beim Nebellicht angestrebte breite Lichtverteilung günstig ist. Auch die zweite Halbleiterlichtquelle kann eine oder mehrere Leuchtdioden aufweisen.

Dadurch, dass die beiden Halbleiterlichtquellen so angeordnet sind, dass eine Hauptabstrahlrichtung der ersten Halbleiterlichtquelle nicht parallel zu einer Hauptabstrahlrichtung der zweiten Halbleiterlichtquelle verläuft, wird ein weiterer Freiheitsgrad für die Erzeugung der Lichtverteilungen bereit gestellt. So können die Hauptabstrahlrichtungen beider Halbleiterlichtquellen auf verschiedene Bereiche des Reflektors zielen, die jeweils zur Erzeugung der zugehörigen Lichtverteilung optimiert gestaltet sind. Dies ist bei sogenannten Freiformreflektoren möglich.
Um eine möglichst breite Nebellichtverteilung zu erzielen, ist bei einer weiteren Ausgestaltung vorgesehen, dass eine transparente, eine Lichtaustrittsfläche des Frontscheinwerfers abdeckende Scheibe optische Elemente aufweist, die eine horizontale Divergenz des aus der Lichtaustrittsfläche austretenden Lichtes im Vergleich zu einer keine optischen Elemente aufweisenden Scheibe vergrößern.
Eine weitere bevorzugte Ausgestaltung zeichnet sich durch wenigstens ein optisches Element in Form einer Primäroptik und/oder eines Zwischenreflektors aus, wobei das optische Element der ersten und/oder der zweiten Halbleiterlichtquelle zugeordnet ist und dazu eingerichtet ist, Licht der ersten Halbleiterlichtquelle und/oder der zweiten Halbleiterlichtquelle auf den Reflektor zu richten.
Diese Ausgestaltungen erlauben durch die je nach Ausgestaltung der Primäroptiken erfolgende Lichtbündelformung in Form einer Richtungsänderung und/oder einer Steigerung der Divergenz oder der Konvergenz eine gezielte Beleuchtung bestimmter Reflektorbereiche, die für die jeweils zu erzeugende Lichtverteilung optimiert sind.

In einer weiteren Ausgestaltung weist der Frontscheinwerfer zusätzlich ein oder mehrere Lichtmodule auf, die zur Erzeugung weiterer Lichtverteilungen eingerichtet sind. Durch diese Ausgestaltung wird der für die Anordnung sämtlicher Lichtmodule erforderliche Platzbedarf verringert, was eine Verkleinerung des Frontscheinwerfers oder eine vereinfachte Anordnung von schwenkbaren und damit Bauraum-beanspruchenden Kurvenlichtmodulen erlaubt.

In einer alternativen Ausgestaltung weist der Frontscheinwerfer keine zusätzlichen Lichtmodule auf, die zur Erzeugung einer Abblendlichtverteilung und/oder einer Fernlichtverteilung eingerichtet sind. In diesem Fall erlaubt die Erfindung den Wegfall separater Lichtmodule für die Erzeugung der zweiten Lichtverteilung und eröffnet die bereits beschriebene Nachrüstmöglichkeit für ein modernes, durch Halbleiterlichtquellen bereitgestelltes Tagfahrlicht.

Weitere Vorteile ergeben sich aus den abhängigen Ansprüchen, der Beschreibung und den beigefügten Figuren.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

### Zeichnungen

Ausführungsbeispiele der Erfindung sind in den Zeichnungen dargestellt und werden in der nachfolgenden Beschreibung näher erläutert. Dabei bezeichnen gleiche Bezugszeichen in den verschiedenen Figuren jeweils gleiche Elemente. Es zeigen, jeweils in schematischer Form:
- Fig. 1: eine Schnittdarstellung eines Frontscheinwerfers nach dem Oberbegriff des Anspruchs 1 in einer Seitenansicht;
- Fig. 2: eine perspektivische Darstellung eines Frontscheinwerfers zusammen mit Ausgestaltungen möglicher Lichtverteilungen;
- Fig. 3: erfindungsgemäße Ausgestaltung einer Anordnung von Halbleiterlichtquellen in Bezug auf einen Reflektor des Frontscheinwerfers; und
- Fig. 4: eine Ausgestaltung einer Halbleiterlichtquelle.
Im einzelnen zeigt die Fig. 1 einen Frontscheinwerfer 10 für ein Kraftfahrzeug mit einer Anordnung aus einem Reflektor 12 und einer ersten Halbleiterlichtquelle 14.
Dabei sind eine Form des Reflektors 12 und die Geometrie der Anordnung so aufeinander abgestimmt, dass Licht 16 der ersten Halbleiterlichtquelle 14 eine erste Lichtverteilung in Form einer Nebellichtverteilung mit einer Hell-Dunkel-Grenze erzeugt. Der Frontscheinwerfer 10 weist eine zweite Halbleiterlichtquelle 18 auf, die relativ zu dem Reflektor 12 so angeordnet ist, dass ihr Licht 20 eine zweite Lichtverteilung erzeugt, bei der Bereiche, die bei der ersten Lichtverteilung in einem vergleichsweise dunklen Bereich oberhalb der Hell-Dunkel-Grenze liegen, vergleichsweise stärker beleuchtet werden. Dies wird durch die im Vergleich zur Position der ersten Halbleiterlichtquelle 14 in Fahrtrichtung weiter nach vorn verschobene Position der zweiten Halbleiterlichtquelle erreicht.
In der Darstellung der Fig. 1 wird diese Eigenschaft durch die aufwärts geneigte Richtung des Lichtes 20 der zweiten Halbleiterlichtquelle 18 repräsentiert. Das Licht 16 der ersten Halbleiterlichtquelle 14 wird dagegen eher waagerecht abgestrahlt.

Die Anordnung aus dem Reflektor 12 und den beiden Halbleiterlichtquellen 14 und 18 ist innerhalb eines Gehäuses 22 untergebracht, das von einer transparenten Scheibe 24 verschlossen wird. Die transparente Scheibe 24 deckt damit insbesondere eine Lichtaustrittsfläche des Frontscheinwerfers 10 ab.

Die beiden Halbleiterlichtquellen 14, 18 werden von einem Steuergerät 26 gesteuert und mit elektrischer Energie versorgt. Dazu werden dem Steuergerät 26 Eingangssignale E zugeführt, die über eine Betätigung von Schaltern durch den Fahrer des Kraftfahrzeugs oder von einem oder mehreren anderen Steuergeräten des Kraftfahrzeugs, zum Beispiel von einem zentralen Beleuchtungssteuergerät, erzeugt werden. In der dargestellten Ausgestaltung ist das Steuergerät 26 ein Bestandteil des Frontscheinwerfers 10. In einer alternativen Ausgestaltung werden die Halbleiterlichtquellen 14, 18 durch ein separates Steuergerät angesteuert, das räumlich getrennt vom übrigen Frontscheinwerfer 10 angeordnet ist.

Der Frontscheinwerfer 10 ist dazu eingerichtet bei einer bestimmungsgemäßen Verwendung in einem Kraftfahrzeug Licht bevorzugt in eine Fahrtrichtung 28 abzustrahlen und dabei, je nach Ansteuerung der beiden Halbleiterlichtquellen 14, 18, unterschiedliche Lichtverteilungen in vertikaler Richtung V und horizontaler Richtung H zu erzeugen.

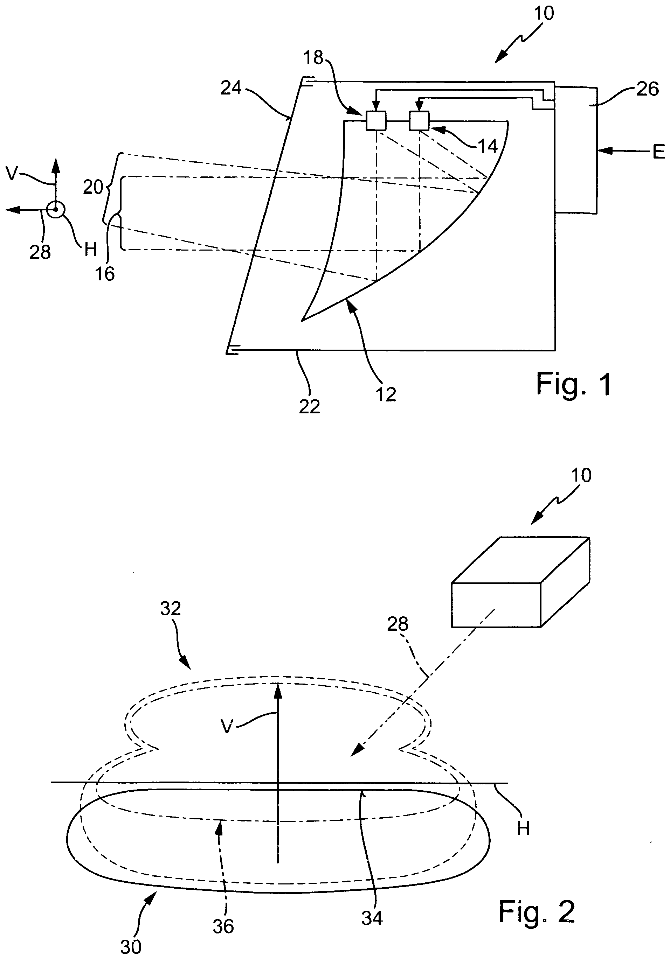

Die Fig. 2 zeigt eine perspektivische Darstellung eines Frontscheinwerfers 10 zusammen mit Ausgestaltungen möglicher Lichtverteilungen. Dabei ist eine erste Lichtverteilung 30 mit einer durchgezogenen Linie dargestellt, während eine weitere Lichtverteilung 32 durch eine gestrichelte Linie begrenzt wird. Die erste Lichtverteilung 30 ist eine Nebellichtverteilung mit einer Hell-Dunkel-Grenze 34 und wird bei ausgeschalteter zweiter Halbleiterlichtquelle 18 allein von der ersten Halbleiterlichtquelle 14 erzeugt. Die Hell-Dunkel-Grenze 34 liegt dabei unterhalb einer Horizontalen H, die eine vertikale Lage des Horizonts repräsentiert. Oberhalb der Hell-Dunkel-Grenze 34 ergibt sich bei der ersten Lichtverteilung 30 ein vergleichsweise dunkler Bereich.

Die Nebellichtverteilung 30 zeichnet sich unter anderem auch durch eine vergleichsweise große Breite in Richtung der Horizontalen H aus. Um eine solche breite Lichtverteilung zu erzielen, sieht eine Ausgestaltung vor, dass die transparente, die Lichtaustrittsfläche des Frontscheinwerfers 10 abdeckende Scheibe 24 optische Elemente aufweist, die eine horizontale Divergenz des aus der Lichtaustrittsfläche austretenden Lichtes im Vergleich zu einer keine optischen Elemente aufweisenden Scheibe 24 vergrößern. Solche optischen Elemente können feine Erhöhungen und/oder Vertiefungen in Form von Linien, Vielecken, Kissen, Walzen, Keilen und/oder anderen Licht brechenden Elementen sein, die auf der in Fahrtrichtung 28 liegenden Außenseite oder der Innenseite der Scheibe 24 angeordnet sind.

Die weitere Lichtverteilung 32 wird bei gleichzeitig betriebener erster Halbleiterlichtquelle 14 und zweiter Halbleiterlichtquelle 18 erzeugt. Die weitere Lichtverteilung 32 ergibt sich in einer Ausgestaltung aus einer Überlagerung einer abgeschwächten ersten Lichtverteilung 30 und einer strichpunktiert dargestellten zweiten Lichtverteilung 36, die vom Licht 20 der zweiten Halbleiterlichtquelle 18 erzeugt wird.

Die zweite Lichtverteilung 36 zeichnet sich dadurch aus, dass Bereiche, die bei der ersten Lichtverteilung 30 in einem vergleichsweise dunklen Bereich oberhalb der Hell-Dunkel-Grenze 34 liegen, vergleichsweise stärker beleuchtet werden.

Die als Summenlichtverteilung der ersten Lichtverteilung 30 und der zweiten Lichtverteilung 36 resultierende weitere Lichtverteilung 32 wird in einer Ausgestaltung als Tagfahrlichtverteilung durch einen gemeinsamen Betrieb beider Halbleiterlichtquellen 14, 18 erzeugt. Auf diese Weise wird ein leistungsfähiges Tagfahrlicht bereitgestellt, wobei die Mehrfachnutzung der für das Nebellicht eingerichteten ersten Halbleiterlichtquelle 14 die oben genannten Vorteile liefert.

In einer Ausgestaltung wird die erste Halbleiterlichtquelle 14 zur Erzeugung der Tagfahrlichtverteilung abgeschwächt betrieben. Die Abschwächung der ersten Lichtverteilung 30 ist in der Fig. 2 durch einen im unteren Bereich gegenüber der ersten Lichtverteilung 30 zurückgezogenen Verlauf der Summenlichtverteilung 32 erkennbar. Die Linien, die die Lichtverteilungen 30, 32 und 36 begrenzen, können jeweils als Linien gleicher Intensität betrachtet werden. Die Abschwächung ergibt sich in einer bevorzugten Ausgestaltung durch einen gedimmten Betrieb der ersten Halbleiterlichtquelle 14. Das Dimmen, also das Verringern des von der erste Halbleiterlichtquelle 14 ausgehenden Lichtstroms, erfolgt zum Beispiel durch eine Verringerung eines Tastverhältnisses eines pulsweitenmodulierten Ansteuersignals der ersten Halbleiterlichtquelle 14 durch das Steuergerät 26 oder durch eine Ansteuerung der ersten Halbleiterlichtquelle über einen anderen Vorwiderstand mit einem größeren Widerstandswert innerhalb des Steuergeräts 26.

Der gedimmte Betrieb der ersten Halbleiterlichtquelle dient dazu, störende Lichtintensitätsunterschiede zwischen dem unteren, vom Lichtstrom 16 der ersten Halbleiterlichtquelle 14 dominierten Bereich der weiteren Lichtverteilung 32 und dem oberen, vom Lichtstrom 20 der zweiten Halbleiterlichtquelle 18 dominierten Bereich der weiteren Lichtverteilung 32 zu verringern. In einer alternativen Ausgestaltung wird die weitere Lichtverteilung 32 ohne eine Dimmung der ersten Halbleiterlichtquelle 14 erzeugt. In einer weiteren Ausgestaltung wird die Nebellichtverteilung allein von der Halbleiterlichtquelle 14 und die Tagfahrlichtverteilung allein von der Halbleiterlichtquelle 18 erzeugt.

Eine alternative oder ergänzende Ausgestaltung sieht vor, dass der Frontscheinwerfer 10 dazu eingerichtet ist, eine Begrenzungslichtverteilung als zweite Lichtverteilung zu erzeugen. Eine weitere bevorzugte Ausgestaltung zeichnet sich dadurch aus, dass der Frontscheinwerfer 10 dazu eingerichtet ist, die Begrenzungslichtverteilung mit einem gedimmten Betrieb der zweiten Halbleiterlichtquelle oder durch einen gedimmten Betrieb beider Halbleiterlichtquellen zu erzeugen. Diese Ausgestaltung besitzt den zusätzlichen Vorteil, dass die Begrenzungslichtfunktion ergänzend zur Tagfahrlichtfunktion ohne eine Änderung der lichttechnischen Hardware, also lediglich durch eine Änderung der Ansteuerung der Halbleiterlichtquellen 14 und 18 realisiert werden kann.

Die gewünschten Eigenschaften werden im Wesentlichen durch die Geometrie der Anordnung der beiden Halbleiterlichtquellen 14, 18 in Bezug auf den Reflektor 12 sowie die Form des Reflektors 12 erzielt. Dabei wird unter dem Begriff der Geometrie der Anordnung jeweils der Abstand der Halbleiterlichtquellen 14, 18 von dem Reflektor 12 in den verschiedenen Raumrichtungen, die Lage der optischen Achsen und Hauptabstrahlrichtungen der Halbleiterlichtquellen 14, 18 und des Reflektors 12 im Raum bestimmt.

Dazu ist der Reflektor 12 bevorzugt als sogenannter Freiformreflektor realisiert, dessen Reflexionsfläche so geformt ist, dass sie bei einer vorbestimmten Beleuchtung eine vorbestimmte Lichtverteilung erzeugt.

Der Frontscheinwerfer 10 weist in einer Ausgestaltung zusätzlich zu der Anordnung aus dem Reflektor 12 und den beiden Halbleiterlichtquellen 14, 18 ein oder mehrere Lichtmodule auf, die zur Erzeugung weiterer Lichtverteilungen wie einer Abblendlichtverteilung, einer Fernlichtverteilung und dergleichen eingerichtet sind. Diese zusätzlichen Lichtmodule können nach dem Reflexionsprinzip oder dem Projektionsprinzip aufgebaut sein und in Form von kardanisch aufgehängten Baugruppen um eine horizontale und eine vertikale Achse schwenkbar realisiert sein, um eine Leuchtweitenanpassung und/oder eine Kurvenlichtfunktion zu ermöglichen.

In einer alternativen Ausgestaltung weist der Frontscheinwerfer 10 keine zusätzlichen Lichtmodule auf, die zur Erzeugung einer Abblendlichtverteilung und/oder einer Fernlichtverteilung eingerichtet sind Diese Ausgestaltungen werden räumlich getrennt von Hauptscheinwerfern in Stoßfänger des Kraftfahrzeugs eingebaut. Bei dieser Ausgestaltung erlaubt die Erfindung den Wegfall separater Lichtmodule für die Erzeugung der zweiten Lichtverteilung und eröffnet eine Nachrüstmöglichkeit für ein modernes, durch Halbleiterlichtquellen bereitgestelltes Tagfahrlicht.

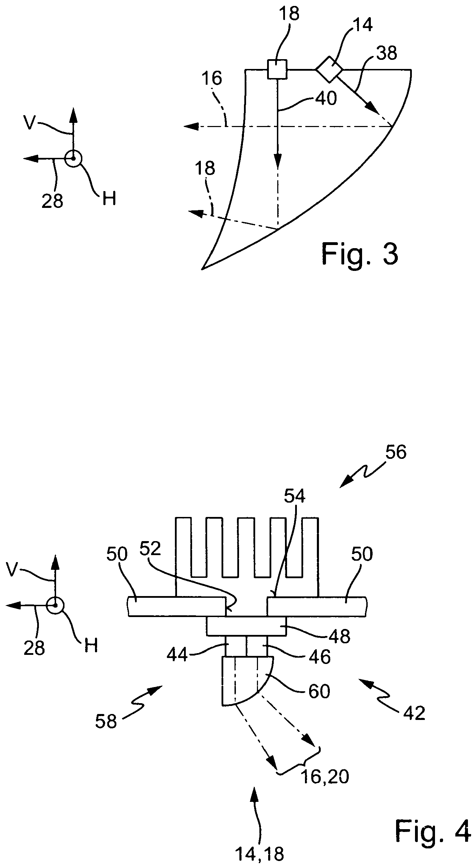

Fig. 3 zeigt eine erfindungsgemäße Ausgestaltung mit einer veränderten Anordnung der ersten Halbleiterlichtquelle 14 in Bezug auf den Reflektor 12. Dem Reflektor 12 ist ein Koordinatensystem mit einer horizontalen Achse H, einer vertikalen Achse V sowie der Fahrtrichtung 28 zugeordnet. Darüber hinaus besitzt der Reflektor eine (optische) Achse, die weitgehend in Fahrtrichtung 28 zeigt. In der Ausgestaltung, die in der Fig. 3 dargestellt ist, sind die beiden Halbleiterlichtquellen 14, 18 so angeordnet, dass eine Hauptabstrahlrichtung 38 der ersten Halbleiterlichtquelle 14 nicht parallel zu einer Hauptabstrahlrichtung 40 der zweiten Halbleiterlichtquelle 18 verläuft. Diese Ausgestaltung stellt einen weiteren Freiheitsgrad für die Erzeugung der Lichtverteilungen bereit So können die Hauptabstrahlrichtungen 38, 40 beider Halbleiterlichtquellen 14, 18 auf verschiedene Bereiche des Reflektors 12 zielen, die jeweils zur Erzeugung der zugehörigen Lichtverteilung optimiert gestaltet sind. Dies ist bei sogenannten Freiformreflektoren möglich.
Fig. 4 zeigt eine Ausgestaltung einer Halbleiterlichtquelle 14 und/oder 18. Die Halbleiterlichtquellen 14, 18 sind bevorzugt als LED-Module 42 ausgebildet, die eine oder mehrere Leuchtdioden 44, 46 auf einem gemeinsamen Chip 48 oder auf mehreren Chips 48 tragen, von denen jeder eine oder mehrere LEDs aufweist. Die LED-Module 42 sind auf einem Schaltungsträger 50 montiert, auf dem neben den LEDs 44, 46 auch weitere elektronische Bauteile angeordnet sein können. Der Schaltungsträger 50 ist je nach Montagegeometrie flexibel oder starr ausgebildet und weist bevorzugt Vorrichtungen 52 zur Durchführung der Wärme der LEDs 44, 46 an einen auf der Rückseite 54 des Schaltungsträgers 50 angeordneten Kühlkörper 56 auf. In der dargestellten Ausgestaltung ist die Vorrichtung 52 lediglich eine Ausnehmung, durch die ein Vorsprung des Kühlkörpers 56 so hindurchgreift, dass er in thermischem Kontakt an dem Chip 48 anliegt, um dessen elektrische Verlustwärme aufzunehmen und abzuführen. Aufgrund der für die Nebellichtfunktion und die Tagfahrlichtfunktion nur vergleichsweise kleinen Leistung erfolgt die Kühlung vorzugsweise passiv, d.h. ohne eine Zwangsströmung, für deren Erzeugung ein Gebläse erforderlich wäre.

Alternativ kann ein Schaltungsträger mit integriertem Kühlkörper, beispielsweise in Form einer Metallkernplatine, verwendet werden. Die LEDs 44, 46 sind insbesondere bevorzugt einzeln oder in Gruppen schaltbar auf dem Schaltungsträger 50 montiert.

Die Halbleiterlichtquellen 14, 18 weisen in einer bevorzugten Ausgestaltung wenigstens ein optisches Element 58 in Form einer Vorsatzoptik 60 und/oder eines Zwischenreflektors auf, wobei jeweils ein optisches Element 58 der ersten Halbleiterlichtquelle 14 und/oder der zweiten Halbleiterlichtquelle 18 zugeordnet ist und dazu eingerichtet ist, Licht 16 der ersten Halbleiterlichtquelle 14 und/oder Licht 20 der zweiten Halbleiterlichtquelle 18 auf den Reflektor 12 zu richten. Bei quadratischen LED's mit ca. 1 mm Kantenlänge werden vorzugsweise optische Elemente mit einer Brennweite von ca. 14 mm bei einem Abstand der LED's von ca. 3 mm verwendet.

Die Ausgestaltung, die in der Fig. 4 dargestellt ist, weist als optisches Element 58 eine sammelnde Vorsatzoptik 60 auf, die eine interne Totalreflexion zur Bündelung, d.h. zur Verringerung der Divergenz und zur Umlenkung des Lichtes benutzt, das von LEDs 44, 46 emittiert wird. Bereits eine einfache Sammellinse kann als Beispiel eines optischen Elements dienen. Bevorzugt werden jedoch sammelnde Vorsatzoptiken der genannten Art, da diese eine sehr effektive Einkopplung und Auskopplung des Lichtes erlauben, eine Änderung der Lichtrichtung ermöglichen und einen vorbestimmbar gestaltbaren Einfluss auf die Konvergenz ermöglichen.

Diese Ausgestaltungen erlauben durch die je nach Ausgestaltung des jeweiligen optischen Elements erfolgende Lichtbündelformung in Form einer Richtungsänderung und/oder einer Steigerung der Divergenz oder der Konvergenz eine gezielte Beleuchtung bestimmter Reflektorbereiche, die für die jeweils zu erzeugende Lichtverteilung optimiert sind. Dabei lassen sich Reduzierungen dese erforderlichen Bauraums erzielen, was einen weiteren Vorteil darstellt.

## Patentansprüche

1. Frontscheinwerfer (10) für ein Kraftfahrzeug mit einer Anordnung aus einem Reflektor (12) und einer ersten Halbleiterlichtquelle (14), wobei eine Form des Reflektors (12) und die Geometrie der Anordnung so aufeinander abgestimmt sind, dass Licht (16) der ersten Halbleiterlichtquelle (14) eine erste Lichtverteilung (30) in Form einer Nebellichtverteilung mit einer Hell-Dunkel-Grenze (34) erzeugt, wobei der Frontscheinwerfer (10) eine zweite Halbleiterlichtquelle (18) aufweist, die relativ zu dem Reflektor (12) so angeordnet ist, dass ihr am Reflektor (12) reflektiertes Licht (20) eine zweite Lichtverteilung (36) erzeugt, bei der Bereiche, die bei der ersten Lichtverteilung (30) in einem vergleichsweise dunklen Bereich oberhalb der Hell-Dunkel-Grenze (34) liegen, vergleichsweise stärker beleuchtet werden, **dadurch gekennzeichnet, dass** die beiden Halbleiterlichtquellen (14, 18) so angeordnet sind, dass eine Hauptabstrahlrichtung (38) der ersten Halbleiterlichtquelle (14) nicht parallel zu einer Hauptabstrahlrichtung (40) der zweiten Halbleiterlichtquelle (18) verläuft.

2. Frontscheinwerfer (10) nach Anspruch 1, **dadurch gekennzeichnet, dass** der Frontscheinwerfer (10) dazu eingerichtet ist, eine Tagfahrlichtverteilung durch einen gemeinsamen Betrieb beider Halbleiterlichtquellen (14, 18) zu erzeugen.

3. Frontscheinwerfer (10) nach Anspruch 2, **dadurch gekennzeichnet, dass** der Frontscheinwerfer (10) dazu eingerichtet ist, die Tagfahrlichtverteilung mit einem gedimmten Betrieb der ersten Halbleiterlichtquelle (14) zu erzeugen.

4. Frontscheinwerfer (10) nach einem der vorhergehenden Ansprüche, **dadurch gekennzeichnet, dass** der Frontscheinwerfer (10) dazu eingerichtet ist, eine Begrenzungslichtverteilung als weitere Lichtverteilung (32) zu erzeugen.

5. Frontscheinwerfer (10) nach Anspruch 4, **dadurch gekennzeichnet, dass** der Frontscheinwerfer (10) dazu eingerichtet ist, die Begrenzungslichtverteilung mit einem gedimmten Betrieb der zweiten Halbleiterlichtquelle (18) oder durch einen gedimmten Betrieb beider Halbleiterlichtquellen (14, 18) zu erzeugen.

6. Frontscheinwerfer (10) nach einem der vorhergehenden Ansprüche, **dadurch gekennzeichnet, dass** die erste Halbleiterlichtquelle (14) und/oder die zweite Halbleiterlichtquelle (18) eine oder mehrere Leuchtdioden (44, 46) aufweist.

7. Frontscheinwerfer (10) nach einem der vorhergehenden Ansprüche, **dadurch gekennzeichnet, dass** eine transparente, eine Lichtaustrittsfläche des Frontscheinwerfers (10) abdeckende Scheibe (24) optische Elemente aufweist, die eine horizontale Divergenz des aus der Lichtaustrittsfläche austretenden Lichtes (16, 20) im Vergleich zu einer keine optischen Elemente aufweisenden Scheibe vergrößern.

8. Frontscheinwerfer (10) nach einem der vorhergehenden Ansprüche, **gekennzeichnet durch** wenigstens ein optisches Element (58) in Form einer Vorsatzoptik (60) und/oder eines Zwischenreflektors, wobei jeweils ein optisches Element (58) der ersten Halbleiterlichtquelle (14) und/oder der zweiten Halbleiterlichtquelle (18) zugeordnet ist und dazu eingerichtet ist, Licht (16) der ersten Halbleiterlichtquelle und/oder Licht (20) der zweiten Halbleiterlichtquelle (18) auf den Reflektor (12) zu richten.

9. Frontscheinwerfer (10) nach einem der vorhergehenden Ansprüche, **dadurch gekennzeichnet, dass** der Frontscheinwerfer (10) zusätzlich ein oder mehrere Lichtmodule aufweist, die zur Erzeugung weiterer Lichtverteilungen eingerichtet sind.

10. Frontscheinwerfer (10) nach einem der Ansprüche 1 bis 8, **dadurch gekennzeichnet, dass** der Frontscheinwerfer (10) keine zusätzlichen Lichtmodule aufweist, die zur Erzeugung einer Abblendlichtverteilung und/oder einer Fernlichtverteilung eingerichtet sind.

## Claims

1. Front headlamp (10) for a motor vehicle, comprising an arrangement made up of a reflector (12) and a first semiconductor light source (14), a shape of the reflector (12) and the geometry of the arrangement being aligned such that light (16) from the first semiconductor light source (14) produces a first light distribution (30) in the form of a fog light distribution having a cut-off line (34), the front headlamp (10) having a second semiconductor light source (18) which is arranged relative to the reflector (12) such that the light (20) from said source that is reflected by the reflector (12) produces a second light distribution (36) in which regions that are in a comparatively dark region above the cut-off line (34) in the first light distribution (30) are illuminated to a comparatively more significant degree, **characterized in that** the two semiconductor light sources (14, 18) are arranged such that a main beam direction (38) of the first semiconductor light source (14) does not run in parallel with a main beam direction (40) of the second semiconductor light source (18).

2. Front headlamp (10) according to claim 1, **characterized in that** the front headlamp (10) is designed to produce a daytime running light distribution by joint operation of the two semiconductor light sources (14, 18).

3. Front headlamp (10) according to claim 2, **characterized in that** the front headlamp (10) is designed to produce the daytime running light distribution by means of dimmed operation of the first semiconductor light source (14).

4. Front headlamp (10) according to any of the preceding claims, **characterized in that** the front headlamp (10) is designed to produce a side light distribution as a further light distribution (32).

5. Front headlamp (10) according to claim 4, **characterized in that** the front headlamp (10) is designed to produce the side light distribution by means of dimmed operation of the second semiconductor light source (18) or by dimmed operation of the two semiconductor light sources (14, 18).

6. Front headlamp (10) according to any of the preceding claims, **characterized in that** the first semiconductor light source (14) and/or the second semiconductor light source (18) has one or more LEDs (44, 46).

7. Front headlamp (10) according to any of the preceding claims, **characterized in that** a transparent pane (24) that covers a light-emission surface of the front headlamp (10) has optical elements which increase a horizontal divergence of the light (16, 20) emitted from the light-emission surface compared with a pane that does not have any optical elements.

8. Front headlamp (10) according to any of the preceding claims, **characterized by** at least one optical element (58) in the form of auxiliary optics (60) and/or an intermediate reflector, one optical element (58) being associated in each case with the first semiconductor light source (14) and/or the second semiconductor light source (18) and being designed to direct light (16) from the first semiconductor light source and/or light (20) from the second semiconductor light source (18) to the reflector (12).

9. Front headlamp (10) according to any of the preceding claims, **characterized in that** the front headlamp (10) additionally has one or more light modules which are designed to produce further light distributions.

10. Front headlamp (10) according to any of claims 1 to 8, **characterized in that** the front headlamp (10) does not have any additional light modules that are designed to produce dipped beam distribution and/or full beam distribution.

## Revendications

1. Phare frontal (10) pour un véhicule automobile, avec un agencement constitué d'un réflecteur (12) et d'une première source lumineuse semiconductrice (14), une forme du réflecteur (12) et la géométrie de l'agencement étant accordés l'un avec l'autre de façon que de la lumière (16) de la première source lumineuse semiconductrice (14) produise une première répartition de lumière (30) sous la forme d'une répartition de lumière de feux de brouillard avec une ligne de coupure (34), le phare frontal (10) comprenant une deuxième source lumineuse semiconductrice (18) qui est disposée, par rapport au réflecteur (12) de façon que sa lumière réfléchie sur le réflecteur (12) produise une deuxième répartition (36) dans laquelle des zones qui, dans la première répartition de lumière (30), sont situées dans une zone comparativement foncée au-dessus de la ligne de coupure (34), sont illuminées plus fortement, **caractérisé en ce que** les deux sources lumineuses semiconductrices (14, 18) sont disposées de façon qu'une direction principale d'émission (38) de la première source lumineuse semiconductrice (14) ne soit pas parallèle à une direction principale d'émission (40) de la deuxième source lumineuse semiconductrice (18).

2. Phare frontal (10) selon la revendication 1, **caractérisé en ce que** le phare frontal (10) est agencé pour produire une répartition de feux de jour par un fonctionnement commun des deux sources lumineuses semiconductrices (14, 18) .

3. Phare frontal (10) selon la revendication 2, **caractérisé en ce que** le phare frontal (10) est agencé pour produire une répartition de feux de jour par un fonctionnement à intensité réduite de la première source lumineuse semiconductrice (14).

4. Phare frontal (10) selon l'une des revendications précédentes, **caractérisé en ce que** le phare frontal (10) est agencé pour produire une répartition de feux de gabarit comme répartition de feux (32) supplémentaire.

5. Phare frontal (10) selon la revendication 4, **caractérisé en ce que** le phare frontal (10) est agencé pour produire une répartition de feux de gabarit par un fonctionnement à intensité réduite de la deuxième source lumineuse semiconductrice (18) ou par un fonctionnement à intensité réduite des deux sources lumineuses semiconductrices (14, 18) .

6. Phare frontal (10) selon l'une des revendications précédentes, **caractérisé en ce que** la première source lumineuse semiconductrice (14) et/ou la deuxième source lumineuse semiconductrice (18) comprend une ou plusieurs diodes électroluminescentes (44, 46).

7. Phare frontal (10) selon l'une des revendications précédentes, **caractérisé en ce qu'**une glace transparente (24) recouvrant la surface de sortie de la lumière du phare frontal (10) comprend des éléments optiques qui augmentent une divergence horizontale de la lumière (16, 20) sortant de la surface de sortie de la lumière par rapport à une glace ne comportant pas d'éléments optiques.

8. Phare frontal (10) selon l'une des revendications précédentes, **caractérisé par** au moins un élément optique (58) sous la forme d'une optique rapportée (60) et/ou d'un réflecteur intermédiaire, un élément optique respectif (58) étant associé à la première source lumineuse semiconductrice (14) et/ou à la deuxième source lumineuse semiconductrice (18) et étant configuré pour orienter de la lumière (16) de la première source lumineuse semiconductrice et/ou de la lumière (20) de la deuxième source lumineuse semiconductrice (18) sur le réflecteur (12).

9. Phare frontal (10) selon l'une des revendications précédentes, **caractérisé en ce que** le phare frontal (10) comprend en outre un ou plusieurs modules de lumière qui sont configurés pour produire d'autres répartitions de feux.

10. Phare frontal (10) selon l'une des revendications 1 à 8, **caractérisé en ce que** le phare frontal (10) ne comporte pas de modules de lumière supplémentaires qui sont configurés pour produire une répartition de feux de croisement et/ou une répartition de feux de route.
